# EUROPEAN PATENT APPLICATION

(11) **EP 3 213 655 A1**
(43) Date of publication of application: **06.09.2017**
(21) Application number: 17159195.1
(22) Date of filing: 03.03.2017
(51) Int. Cl.: A45F 3/16, A45F 3/18

(54) **PORTABLE BEVERAGE CONTAINER WITH ROBUST, COLLAPSIBLE HANDLE**

(30) Priority: 04.03.2016 US 201662303942 P
(71) Applicant: Ignite USA, LLC, Chicago, Illinois 60601 (US)
(72) Inventor: BOYER, Christopher T., Oak Park, IL Illinois 60302 (US); COON, Robert C., Chicago, IL Illinois 60618 (US); WASHBURN, Bryan, Buffalo Grove, IL Illinois 60089 (US)
(74) Representative: Roberts, David

(57) **Abstract**

A portable beverage container includes a container body defining an interior volume adapted to store a liquid, and a handle assembly including a first handle portion movably coupled to a first exterior portion of the container body and a second handle portion movably coupled to a second exterior portion of the container body. The first and second handle portions are movably coupled to one another to move the handle assembly between an open configuration, in which the first and second handle portions extend away from the container body, and a collapsed configuration, in which the first and second handle portions are immediately adjacent the container body.

## Description

### Field of the Disclosure

The present disclosure is directed to portable beverage containers and, more particularly, to a portable beverage container having a robust, collapsible handle.

### Background

Portable beverage containers, such as tumblers, mugs, and the like, are commonly used by people who want to drink coffee, tea, or other liquids when walking, driving, or otherwise traveling between two different places. In many cases, portable beverage containers include a handle that is coupled to a container base so as to allow an end user to hold or carry the container when walking, driving, or otherwise traveling between two different places. Such handles can also be useful for pouring liquid from the beverage containers. In some cases, the handle is fixed to the container base in an open or extended position, thereby allowing the end user to hold or carry the container at any time. However, these fixed handles often break easily when, for example, the portable beverage container is dropped, transported when not in use (e.g., in a backpack), or picked up at an awkward angle. In other cases, the handle can be movably coupled to the container base, thereby permitting the handle to be collapsed when desired (e.g., during transport of the beverage container when not in-use). However, known handles of this type are often fragile, tend to collapse during filling and/or usage of the portable beverage container, and tend to be difficult to manipulate (e.g., between different positions).

### Summary

In accordance with one exemplary aspect of the present disclosure, a portable beverage container is provided. The portable beverage container includes a container body defining an interior volume adapted to store a liquid, and a handle assembly including a first handle portion movably coupled to a first exterior portion of the container body and a second handle portion movably coupled to a second exterior portion of the container body. The first and second handle portions are movably coupled to one another to move the handle assembly between an open configuration, in which the first and second handle portions extend away from the container body, and a collapsed configuration, in which the first and second handle portions are immediately adjacent the container body.

In some embodiments, the first handle portion is pivotably coupled to the first exterior portion via a first bracket assembly.

In some embodiments, the first bracket assembly comprises a first bracket and a first cover element covering the first bracket, and wherein the handle assembly further comprises a first pin coupled to the first handle portion and arranged in an aperture of the first cover element to pivotably couple the first handle portion to the first cover element.

In some embodiments, the second handle portion is pivotably and slidably coupled to the second exterior portion via a second bracket assembly.

In some embodiments, the second bracket assembly comprises a second bracket and a second cover element covering the second bracket, wherein the second cover element has a slot, and wherein the handle assembly further comprises a second pin coupled to the second handle portion and movably disposed in the slot to facilitate movement of the second handle portion relative to the second exterior portion of the container body.

In some embodiments, the slot extends along an axis that is angled relative to a longitudinal axis of the container body.

In some embodiments, the slot defines a first stop surface and a second stop surface, the first stop surface corresponding to the open configuration of the handle assembly, and the second stop surface corresponding to the closed configuration of the handle assembly.

In some embodiments, the first handle portion comprises a first locking feature and the second handle portion comprises a second locking feature configured to releasably engage the first locking feature when the handle assembly is moved to the open configuration, thereby defining an open detent position that releasably locks the handle assembly in the open configuration.

In accordance with another exemplary aspect of the present disclosure, a portable beverage container is provided. The portable beverage container includes a container body defining an interior volume adapted to store a liquid, and a handle assembly including a first handle portion movably coupled to a first exterior portion of the container body and a second handle portion movably coupled to a second exterior portion of the container body. The first and second handle portions are movably coupled to one another to move the handle assembly between an open configuration, in which the first and second handle portions extend away from the container body, and a collapsed configuration, in which the first and second handle portions are immediately adjacent the container body. The first handle portion includes a first locking feature and the second handle portion includes a second locking feature configured to releasably engage the first locking feature when the handle assembly is moved to the open configuration, thereby defining an open detent position that releasably locks the handle assembly in the open configuration.

In some embodiments, the first locking feature comprises a projection located proximate to an end of the first handle portion, and the second locking feature comprises a first recessed area of a cutout located proximate to an end of the second handle portion, the projection configured to be retained in the first recessed area when the handle assembly is moved to the open configuration, thereby defining the open detent position.

In some embodiments, the second handle portion comprises a third locking feature configured to releasably engage the first locking feature when the handle assembly is moved to the collapsed configuration, thereby defining a closed detent position that releasably locks the handle assembly in the closed configuration.

In some embodiments, the first locking feature comprises a projection located proximate to an end of the first handle portion, and the third locking feature comprises a second recessed area of a cutout located proximate to an end of the second handle portion, the projection configured to be retained in the second recessed area when the handle assembly is moved to the collapsed configuration, thereby defining the closed detent position.

In some embodiments, the first handle portion is pivotably coupled to the first exterior portion via a first bracket assembly, the first bracket assembly comprising a first bracket and a first cover element covering the first bracket, and wherein the handle assembly further comprises a first pin coupled to the first handle portion and arranged in an aperture of the first cover element to pivotably couple the first handle portion to the first cover element.

In some embodiments, the second handle portion is pivotably and slidably coupled to the second exterior portion via a second bracket assembly, the second bracket assembly comprising a second bracket and a second cover element covering the second bracket, wherein the second cover element has a slot, and wherein the handle assembly further comprises a second pin coupled to the second handle portion and movably disposed in the slot to facilitate movement of the second handle portion relative to the second exterior portion of the container body.

In some embodiments, the slot defines a first stop surface and a second stop surface, the first stop surface corresponding to the open configuration of the handle assembly, and the second stop surface corresponding to the closed configuration of the handle assembly.

In accordance with another exemplary aspect of the present disclosure, a portable beverage container is provided. The portable beverage container includes a container body defining an interior volume adapted to store a liquid, and a handle assembly including a first handle portion movably coupled to a first exterior portion of the container body and a second handle portion pivotably and slidably coupled to a second exterior portion of the container body via a slot. The first and second handle portions are movably coupled to one another to move the handle assembly between an open configuration, in which the first and second handle portions extend away from the container body, and a collapsed configuration, in which the first and second handle portions are immediately adjacent the container body. The first handle portion includes a first locking feature and the second handle portion includes a second locking feature configured to releasably engage the first locking feature when the handle assembly is moved to the open configuration, thereby defining an open detent position that releasably locks the handle assembly in the open configuration.

In some embodiments, the second handle portion comprises a third locking feature configured to releasably engage the first locking feature when the handle assembly is moved to the collapsed configuration, thereby defining a closed detent position that releasably locks the handle assembly in the closed configuration.

In some embodiments, the first locking feature comprises a projection located proximate to an end of the first handle portion, the second locking feature comprises a first recessed area of a cutout located proximate to an end of the second handle portion, and the third locking feature comprises a second recessed area of the cutout, the projection configured to be retained in the first recessed area when the handle assembly is moved to the open configuration, thereby defining the open detent position, and the projection configured to be retained in the second recessed area when the handle assembly is moved to the collapsed configuration, thereby defining the closed detent position.

In some embodiments, wherein the handle assembly further comprises a second pin coupled to the second handle portion and movably disposed in the slot to facilitate movement of the second handle portion relative to the second exterior portion of the container body.

In some embodiments, the slot defines a first stop surface and a second stop surface, the first stop surface corresponding to the open configuration of the handle assembly, and the second stop surface corresponding to the closed configuration of the handle assembly.

### Brief Description of the Drawings

The disclosure may be best understood by reference to the following description taken in conjunction with the accompanying drawings, in which like reference numerals identify like elements in the several FIGS., in which:
FIG. 1 is an exploded view of a portable beverage container having a collapsible handle assembly constructed in accordance with the principles of the present disclosure;
FIG. 2A is a partial cross-sectional view of the portable beverage container of FIG. 1, showing the collapsible handle assembly in an open configuration;
FIG. 2B is a close up, partial cross-sectional view of a first portion of the collapsible handle assembly shown in FIG. 2A;
FIG. 2C is a close-up, partial cross-sectional view of a second portion of the collapsible handle assembly shown in FIG. 2A;
FIG. 2D is a close-up view of the connection between a top of the collapsible handle assembly shown in FIG. 2A and a container body of the portable beverage container;
FIG. 2E is a cross-sectional view of the connection shown in FIG. 2D;
FIG. 3A is a partial cross-sectional view of another portable beverage container having a collapsible handle assembly constructed in accordance with the principles of the present disclosure, showing the collapsible handle assembly in a collapsed configuration;
FIG. 3B is a partial cross-sectional view of the first portion of the collapsible handle assembly shown in FIG. 2B but when the collapsible handle assembly is in the collapsed configuration; and
FIG. 3C is a partial cross-sectional view of the second portion of the collapsible handle assembly shown in FIG. 2C but when the collapsible handle assembly is in the collapsed configuration.

### Detailed Description

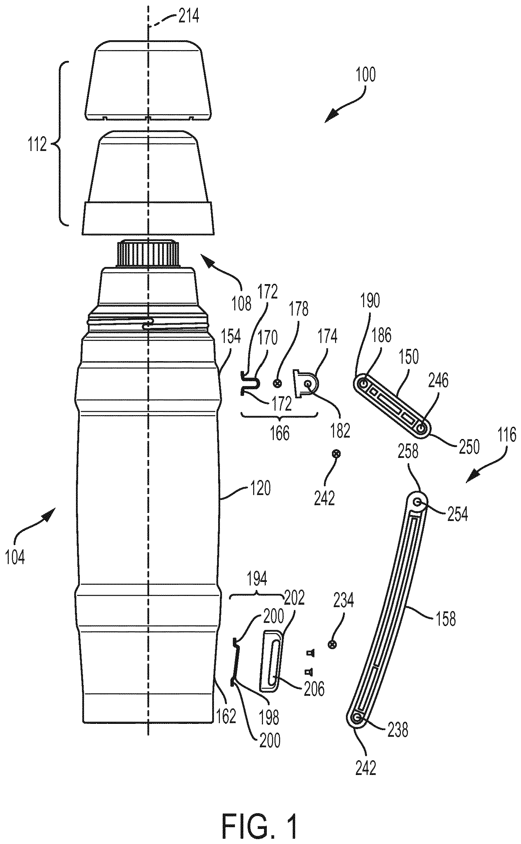

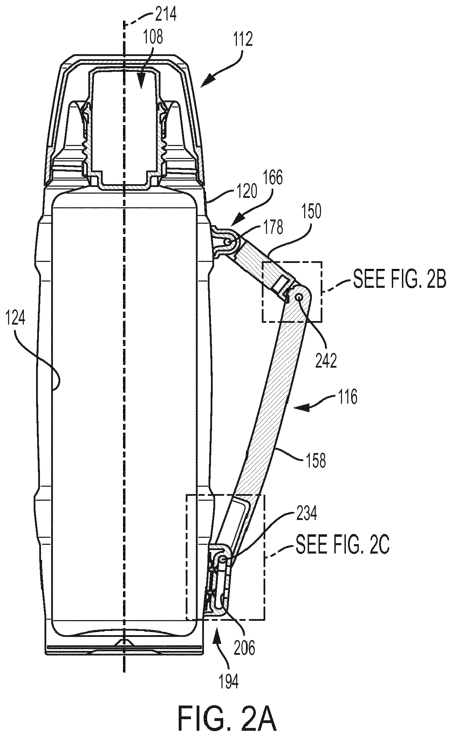

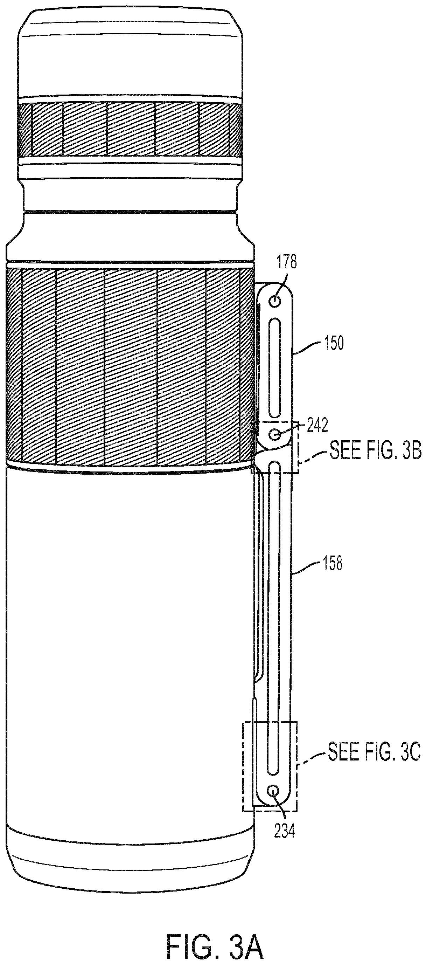

FIGS. 1-3C depict a first example of a portable and reusable beverage container 100 constructed in accordance with the principles of the present disclosure. The beverage container 100, which may be, for example, a large capacity vessel such as a thermal bottle, a thermal carafe, and the like generally includes a container body 104, a plug 108 coupled to the container body 104, an outer cup assembly 112 removably coupled to the container body 104 and the pour spout assembly 108, and a robust, collapsible handle assembly 116 movably coupled to the container body 104. As will be described in greater detail below, the handle assembly 116 is generally reconfigurable between an open or in-use configuration (shown in FIG. 2A), in which the handle assembly 116 extends outwardly away from the container body 104 so as to permit a user of the container 100 to hold or carry and/or pour from the container 100, and a collapsed configuration (shown in FIG. 3A), in which the handle assembly 116 is secured immediately adjacent the container body 104, e.g., in a substantially vertical position, so as to protect the handle assembly 116 from breakage when desired (e.g., when the container 100 is not in-use or is dropped). As will also be described in greater detail below, the handle assembly 116 includes locking features configured to releasably engage one another when the handle assembly 116 is in the open configuration, so as to releasably lock or secure the handle assembly 116 in the open configuration. In this way, the handle assembly 116 is configured to remain in the open configuration, i.e., does not collapse, when the container 100 is being used and/or filled. At the same time, these locking features are easily released when it is desired to move the handle assembly 116 to the collapsed configuration (e.g., to transport the container 100) or when the container 100 is, for example, dropped, such that the handle assembly 116 does not break.

As best illustrated in FIGS. 1 and 2A, the container body 104, which is generally configured to store or contain a liquid, which may be hot or cold, for example, coffee, tea, water, or any other beverage, for consumption by a user of the container 100, is preferably a stainless-steel double walled body, and preferably it has an insulative material, such as foam, or a vacuum, between the two walls. This preferred container body 104 includes an outer or exterior wall 120 and an inner wall 124 (see FIG. 2A), and defines an interior volume for holding or storing the liquid.

As also best illustrated in FIGS. 1 and 2A, the handle assembly 116 generally includes a first handle portion 150 that is movably (e.g., pivotably) coupled to a first or upper portion 154 of the exterior wall 120 of the container body 104, and a second handle portion 158 that is movably (e.g., pivotably and slidably) coupled to a second or lower portion 162 of the exterior wall 120 of the container body 104. Beneficially, the first and second handle portions 150, 158 are coupled to the exterior wall 120 of the container body 104 in a manner that does not require the use of plastic rings around the container body 104, which are typically needed to attach a handle to the container body 104 but can undesirably move relative to one another, thereby negatively affecting the robustness and reliability of the handle. The first and second handle portions 150, 158 are also movably coupled to one another, which facilitates movement of the handle assembly 116 between the open configuration shown in FIG. 2A and the collapsed configuration shown in FIG. 3A.

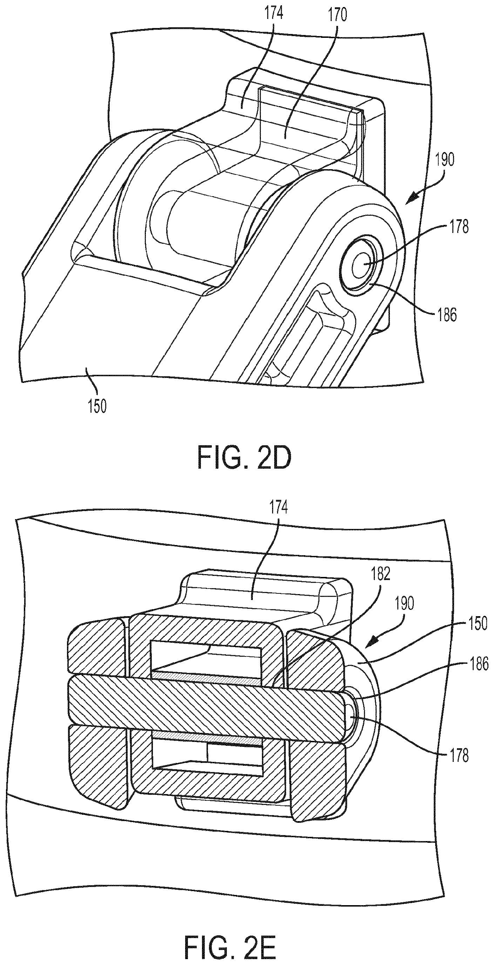

More specifically, the first handle portion 150, which in the exemplified embodiment takes the form of an H-shaped link element, is pivotably coupled to a first bracket assembly 166 that is arranged on the first portion 154 of the exterior wall 120. In the exemplified embodiment, the first bracket assembly 166 includes a first bracket 170, which is substantially U-shaped and has two arms 172 seated against (e.g., welded to, secured to) the exterior wall 120 (only one of which is visible in FIG. 2D), and a first cover element 174, shown in outline in FIG. 2D but fully shown in FIG. 2E, that has a similar shape as the first bracket 170 and is seated against (e.g., welded to, secured to) the exterior wall 120 so as to cover the first bracket 170. The pivotable connection between the first handle portion 150 and the first bracket assembly 166 is effectuated via a pin 178 that is disposed (e.g., inserted) in both an aperture 182 formed in the first cover element 174 and a similarly shaped aperture 186 formed proximate to a first end 190 of the first handle portion 150. In the exemplified embodiment, the pin 178 is press fit into this position, which helps to prevent squeaking of the first bracket assembly 158 by facilitating contact between the pin 178 and the first cover element 174, as illustrated in FIGS. 2D and 2E.

The second handle portion 158, which in the exemplified embodiment also takes the form of a H-shaped link element (but one that is longer than the H-shaped element 150), is pivotably coupled to a second bracket assembly 194 that is arranged on the second portion 162 of the exterior wall 120. In the exemplified embodiment, the second bracket assembly 194 includes a second bracket 198, which like the first bracket 170 has two arms 200 seated against (e.g., welded to, secured to) the exterior wall 120, and a second cover element 202 that is seated against (e.g., welded to, secured to) the exterior wall 120 so as to cover the second bracket 198. Unlike the first cover element 174, the second cover element 202 has a slot 206 defined therethrough. In the exemplified embodiment, the slot 206 extends along an axis 210 that is close to, but not quite, parallel with a longitudinal axis 214 of the container 100. The slot 206 can, for example, be oriented at an angle of between 0 degrees and approximately 5 degrees (e.g., approximately 4 degrees), between approximately 5 degrees and 20 degrees, or some other angle(s). In other examples, the axis 210 can be parallel with the longitudinal axis 214.

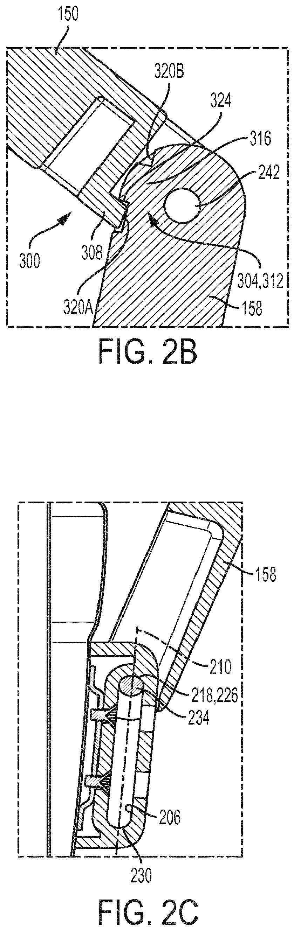

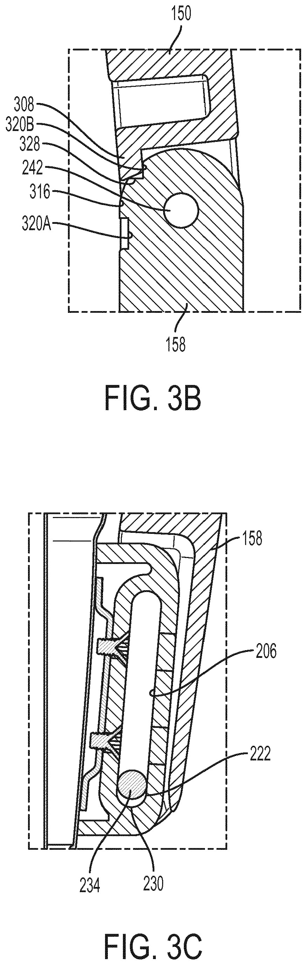

The slot 206 has or defines a first stop surface 218 (see FIG. 2C) that defines or corresponds to the open configuration of the handle assembly 116, and a second stop surface 222 (see FIG. 3C) that is opposite the first stop surface 218 and corresponds to the collapsed configuration of the handle assembly 116. The first stop surface 218 is located at a first end 226 of the slot 206, but the second stop surface 222 is spaced slightly from a second end 230 of the slot 208 (by virtue of the diameter of the slot 206), with the area between the second stop surface 222 and the second end 230 providing a cushion area configured to allow motion of the handle assembly 116 when hyper extended (i.e., when in the collapsed configuration). In the exemplified embodiment, the distance between the second stop surface 222 and the second end 230 is approximately 1.8 mm, meaning that the cushion area is approximately 1.8 mm. In other examples, the distance, i.e., cushion area, can be less than 1.8 mm or greater than 1.8 mm. In one alternative example, the distance is equal to approximately 2.6 mm.

The pivotable connection between the second handle portion 158 and the second bracket assembly 194 is effectuated via a pin 234 that is (i) disposed (e.g., inserted) in an aperture 238 formed proximate to a first end 242 of the second handle portion 158, and (ii) movably disposed in the slot 206. It will be appreciated that the pin 234 thus moves within the slot 206, between the first and second stop surfaces 218, 222, to allow the handle assembly 116 to move between the open configuration and the collapsed configuration. As an example, as the handle assembly 116 is moving from the open configuration to the collapsed configuration, the pin 234 moves in the slot 206, from the first stop surface 218 to the second stop surface 222, until the slot 206 captures the pin 234 in an interference fit, at the second stop surface 222, thereby preventing it from reaching the end 230 of the slot 206 and providing the cushion area noted above.

The first and second handle portions 150, 158 are, in the exemplified embodiment, pivotably coupled to one another via a pin 242 that is disposed (e.g., inserted) in an aperture 246 formed proximate to a second end 250 of the first handle portion 150 and an aperture 254 formed proximate to a second end 258 of the second handle portion 158. As briefly discussed above, the handle assembly 116 includes locking features that releasably engage with one another when the handle assembly 116 is in the open configuration, thereby releasably locking the handle assembly 116 in the open configuration. More specifically, the first handle portion 150 includes a first locking feature 300 and the second handle portion 158 includes a second locking feature 304 that releasably engages the first locking feature 300 when the handle assembly 116 is in the open configuration. In the exemplified embodiment, the first locking feature 300 takes the form of a projection 308 located at or proximate to the second end 250 of the first handle portion 150, while the second locking feature 304 takes the form of a cutout 312 located at or proximate to the second end 258 of the second handle portion 158. The cutout 312, which is defined by a tab 316 arranged between a pair of recessed areas 320A, 320B, is sized to receive, and interferingly but releasably engage, the projection 308, with the exact position of this engagement dependent upon the position of the handle assembly 116. In other examples, the cutout 312 may only include one of the recessed areas 320A, 320B, in which case the cutout 312 would receive, and interferingly but releasably engage, the projection 308 when the handle assembly 116 is in but one position (e.g., the open configuration).

In operation, when the handle assembly 116 is in the open configuration shown in FIG. 2A, the projection 308 is arranged in the recess 320A, and a surface 324 of the tab 316 engages the projection 308, as illustrated in FIG. 2B, thereby releasably locking the projection 308 in this position. This engagement provides the user of the container with tactile feedback that the handle assembly 116 is securely in the open configuration, indicating to the user that the container 100 is, for example, suitable for pouring. This engagement, in conjunction with the natural flex of the first and second portions 150, 158, also provides the handle assembly 116 with the holding strength to keep the handle assembly 116 in the open configuration so long as it is desired. At the same time, the pin 234 is seated against the first stop surface 218, as illustrated in FIG. 2C, such that the handle assembly 116 cannot be moved past the open configuration shown in FIG. 2A. In other words, the first stop surface 218, and more generally the slot 206, hard stops the handle assembly 116 in the open configuration shown in FIG. 2A.

When it is desired to reconfigure the handle assembly 116 from the open configuration shown in FIG. 2A to the collapsed configuration shown in FIG. 3A, e.g., when the user of the container 100 wishes to transport the container 100 in a non-use state, or when the container 100 is inadvertently dropped, the projection 308 can be removed from the recessed area 320A, either in response to manipulation of the handle assembly 116 by the user or in due to the force generated when the container 100 is dropped. This allows the first and second handle portions 150, 158 to be pivoted, relative to one another and to the container body 104, to achieve the collapsed configuration shown in FIG. 3A. As this is happening, the pin 234 travels in the slot 206 from the position shown in FIG. 2C toward the position shown in FIG. 3C. At the same time, the projection 308 is re-positioned and then, when the handle assembly 116 reaches the collapsed configuration, is disposed in the recess 320B, where a surface 328 of the tab 316 engages the projection 308, as illustrated in FIG. 3B, thereby releasably locking the projection 308 in this position.

Thus, it will be appreciated that the handle assembly 116 as exemplified herein includes two detent positions - an open detent position and a closed position-each of which needs to be overcome to move to a different position. The open detent position, which is effectuated by the engagement between the projection 308 and the recessed area 320A, releasably secures the handle assembly 116 in the open configuration. When this open detent position is overcome, e.g., by the user manipulating the handle assembly 116, the handle assembly 116 can be moved to the collapsed configuration. The closed detent position, then, which is effectuated by the engagement between the projection 308 and the recessed area 320B, releasably secures the handle assembly 116 in the collapsed configuration. When this closed detent position is overcome, the handle assembly 116 can be moved back to the open configuration.

Notwithstanding the foregoing, it will be appreciated that the handle assembly 116 may, in some cases, only include one detent position, e.g., the open detent position. In these cases, the handle assembly 116 can be releasably secured in the open configuration, but no such releasable securement will occur in the collapsed configuration.

While not illustrated herein, it will also be appreciated that the handle assembly 116 can be used in connection with a different container, e.g., a container having a different container base, or a container that does not include the plug 108 and/or the outer cup assembly 112. It will also be appreciated that the handle assembly 116 can vary from what is illustrated in FIGS. 1-3C. As an example, the projection 308 and the cutout 312 can be reversed, such that the cutout 312 is located on the first handle portion 150 and the projection 308 is located on the second handle portion 158. As another example, the first and second bracket assemblies 158, 194 can be reversed, such that the slot 206 is located proximate to the top of the container body 104.

## Claims

1. A portable beverage container, comprising:
a container body defining an interior volume adapted to store a liquid; and
a handle assembly comprising a first handle portion movably coupled to a first exterior portion of the container body and a second handle portion movably coupled to a second exterior portion of the container body, the first and second handle portions movably coupled to one another via a pivoting element to move the handle assembly between an open configuration, in which the first and second handle portions extend away from the container body, and a collapsed configuration, in which the first and second handle portions are immediately adjacent the container body.

2. The portable beverage container of claim 1, wherein the first handle portion is pivotably coupled to the first exterior portion via a first bracket assembly.

3. The portable beverage container of claim 2, wherein the first bracket assembly comprises a first bracket and a first cover element covering the first bracket, and wherein the handle assembly further comprises a first pin coupled to the first handle portion and arranged in an aperture of the first cover element to pivotably couple the first handle portion to the first cover element.

4. The portable beverage container of any preceding claim, wherein the second handle portion is pivotably and slidably coupled to the second exterior portion via a second bracket assembly.

5. The portable beverage container of claim 4, wherein the second bracket assembly comprises a second bracket and a second cover element covering the second bracket, wherein the second cover element has a slot, and wherein the handle assembly further comprises a second pin coupled to the second handle portion and movably disposed in the slot to facilitate movement of the second handle portion relative to the second exterior portion of the container body.

6. The portable beverage container of any preceding claim, wherein the first handle portion comprises a first locking feature and the second handle portion comprises a second locking feature configured to releasably engage the first locking feature when the handle assembly is moved to the open configuration, thereby defining an open detent position that releasably locks the handle assembly in the open configuration.

7. A portable beverage container, comprising:
a container body defining an interior volume adapted to store a liquid; and
a handle assembly comprising a first handle portion movably coupled to a first exterior portion of the container body and a second handle portion movably coupled to a second exterior portion of the container body, the first and second handle portions movably coupled to one another to move the handle assembly between an open configuration, in which the first and second handle portions extend away from the container body, and a collapsed configuration, in which the first and second handle portions are immediately adjacent the container body,
wherein the first handle portion comprises a first locking feature and the second handle portion comprises a second locking feature configured to releasably engage the first locking feature when the handle assembly is moved to the open configuration, thereby defining an open detent position that releasably locks the handle assembly in the open configuration.

8. The portable beverage container of claim 7, wherein the first locking feature comprises a projection located proximate to an end of the first handle portion, and the second locking feature comprises a first recessed area of a cutout located proximate to an end of the second handle portion, the projection configured to be retained in the first recessed area when the handle assembly is moved to the open configuration, thereby defining the open detent position.

9. The portable beverage container of any one of claims 7 to 8, wherein the second handle portion comprises a third locking feature configured to releasably engage the first locking feature when the handle assembly is moved to the collapsed configuration, thereby defining a closed detent position that releasably locks the handle assembly in the closed configuration.

10. The portable beverage container of any one of claims 7 to 9, wherein the first handle portion is pivotably coupled to the first exterior portion via a first bracket assembly, the first bracket assembly comprising a first bracket and a first cover element covering the first bracket, and wherein the handle assembly further comprises a first pin coupled to the first handle portion and arranged in an aperture of the first cover element to pivotably couple the first handle portion to the first cover element.

11. The portable beverage container of any one of claims 7 to 10, wherein the second handle portion is pivotably and slidably coupled to the second exterior portion via a second bracket assembly, the second bracket assembly comprising a second bracket and a second cover element covering the second bracket, wherein the second cover element has a slot, and wherein the handle assembly further comprises a second pin coupled to the second handle portion and movably disposed in the slot to facilitate movement of the second handle portion relative to the second exterior portion of the container body.

12. A portable beverage container, comprising:
a container body defining an interior volume adapted to store a liquid; and
a handle assembly comprising a first handle portion pivotably coupled to a first exterior portion of the container body and a second handle portion pivotably and slidably coupled to a second exterior portion of the container body via a slot, the first and second handle portions movably coupled to one another to move the handle assembly between an open configuration, in which the first and second handle portions extend away from the container body, and a collapsed configuration, in which the first and second handle portions are immediately adjacent the container body,
wherein the first handle portion comprises a first locking feature and the second handle portion comprises a second locking feature configured to releasably engage the first locking feature when the handle assembly is moved to the open configuration, thereby defining an open detent position that releasably locks the handle assembly in the open configuration.

13. The portable beverage container of claim 12, wherein the second handle portion comprises a third locking feature configured to releasably engage the first locking feature when the handle assembly is moved to the collapsed configuration, thereby defining a closed detent position that releasably locks the handle assembly in the closed configuration.

14. The portable beverage container of any one of claims 12 to 13, wherein the handle assembly further comprises a second pin coupled to the second handle portion and movably disposed in the slot to facilitate movement of the second handle portion relative to the second exterior portion of the container body.

15. The portable beverage container of any one of claims 12 to 14, wherein the slot defines a first stop surface and a second stop surface, the first stop surface corresponding to the open configuration of the handle assembly, and the second stop surface corresponding to the closed configuration of the handle assembly.
